# EUROPEAN PATENT APPLICATION

(11) **EP 1 217 859 A1**
(43) Date of publication of application: **26.06.2002**
(21) Application number: 01310638.0
(22) Date of filing: 19.12.2001
(51) Int. Cl.: H04Q 7/38, H04M 3/42, H04M 3/436, H04M 1/57

(54) **Method and apparatus for using DTMF for controlling context calls, and mutual context information exchange during mobile communication**

(30) Priority: 20.12.2000 US 741382
(71) Applicant: Nokia Corporation, 02150 Espoo (FI)
(72) Inventor: Mantiyjarvi, Jani, 90230 Oulu (FI); Kangas, Petri, 90800 Oulu (FI); Hoisko, Jyrki, 90570 Oulu (FI); Kangas, Kari, 90570 Oulu (FI); Kemppainen, Jarkko, 90120 Oulu (FI)
(74) Representative: Slingsby, Philip Roy

(57) **Abstract**

A method for operating a wireless communication system includes steps of setting a context-sensitive facility in one of a mobile station or in a wireless network; informing a caller of the setting; and overriding the setting by sending a signal from the caller to the context-sensitive facility. The context-sensitive facility can be implemented as an answering service, the signal can be a DTMF signal generated in response to an input from the caller, and in this case the step of overriding forces the call through to a called parties' mobile station when the setting is to not allow calls to be made to the called parties' mobile station. The same method includes steps of specifying context information at a calling parties' mobile station; transmitting signaling during a call origination phase to selectively exchange context information between the calling party and a called party, the context information being in the form of at least one of graphical icons, text, or information codes specifying graphical icons; and displaying the context information to at least one of the calling party or the called party prior to establishing a voice call.

## Description

This invention relates generally to mobile telecommunication systems and methods and, more specifically, relates to techniques for sending information between two parties using mobile terminals or stations, where the information is descriptive of a context of at least one of the parties.

As wireless telecommunications matures and develops additional capabilities, beyond only making a phone call from one party to another, it has become possible to transmit text messages from one party to another. One type of text messaging is carried by the Short Message Service (SMS) facility. While perfectly adequate for many purposes, a need exits to provide even further and more refined messaging capabilities. One area where such a need exists relates to making one party or user aware of another user's context. A user's "context" in this regard refers to a user's phone (or other communication device) being aware of the physical, and possibly the mental, state of the user at any given time. This can be based on various sensors fitted to the communication device, in conjunction with algorithms to analyze the data generated by the sensors. In one case the communication device can be fitted with location or position determination capability, such as a GPS receiver, so that the user's geographical location is known or can be determined at any given time. In the future it is expected that it will be possible to know more about user's context based on data that other types of sensors provide.

These kinds of sensors as well as communications devices can be networked in a future home, office and/or vehicle embodiment, and thus the data generated by the sensors will be available to the user's communication device. Sensors that can provide useful information for context deduction algorithms include, for example, sensors installed in a bed for detecting the presence of a sleeping person, movement detectors, microphones, watches, clothes, floors of a building, calendar entries, and various types of biometric sensors (e.g., pulse rate, blood pressure, body temperature, etc.)

User context in general encompasses a physical place (e.g., office, home, restaurant, street), physical condition (walking, resting, jogging, sitting), mental condition (tired, angry, anxious, happy, energetic,) and social condition (alone, with someone, in a group, chatting, arguing, in a meeting) and so on.

It is well known that during a conventional telephone call that the two parties may exchange context information either intentionally or unintentionally. For example, the calling party may inquire if the called party is able to speak at the current time, or the called party may simply state that he or she is not currently in a location or in a mood to start a conversation. There are certain situations, however, where it may be inconvenient or impossible for the user to provide his or her context information. For example, if a call is received during a meeting or in a theater (using some type of silent alerting) a user may find it awkward and disruptive to answer the call and inform the calling party that he or she is currently in a situation where a phone conversation cannot take place.

In mobile communication both the caller and the person being called may be in different contexts. As such, it can be appreciated that at times it would be useful to be able to transfer the context information from a first user to a second user. It can further be appreciated that at certain times it may be desirable for a caller to become aware of the called parties' context and then, if desired or required, override the context set by the party being called.

It is also desirable in many cases for a user to maintain his or her context information in the phone itself, and not in the wireless network. This is true at least for privacy reasons, as well as for facilitating rapid changes in context. This latter consideration may be especially important if there is some charge involved in contacting the network in order to update ones context (e.g., leaving a meeting for ten minutes, then reentering the meeting, then leaving again after a few minutes, etc.) Furthermore, the updating of context status can consume some significant amount of battery power in the phone, as it requires that some type of wireless channel to be established between the user's phone and the network context storage center. In addition to the foregoing disadvantages, the user may have little or no control over exactly what context information is disclosed by the network to which calling parties. Finally, in the network-based approach to revealing context the called party has no knowledge of the context of the caller or the characteristics of the call prior to the actual voice call being established.

It is a first object and advantage of this invention to provide methods and apparatus for transferring context from one user to another user in a wireless communications system.

It is a second object and advantage of this invention to provide methods and apparatus that employ Dual Tone, Multiple Frequency (DTMF) signals for transferring context from one user to another user in a wireless communications system.

It is a third object and advantage of this invention to provide methods and apparatus that employ DTMF signals to override a context set by a user in a wireless communications system.

It is a fourth object and advantage of this invention to provide methods and apparatus that employ a text messaging technique for transferring context from one user to another user in a wireless communications system.

It is a further object and advantage of this invention to provide methods and apparatus that employ an iconographic messaging technique for transferring context from one user to another user in a wireless communications system.

It is another object and advantage of this invention to provide methods and apparatus that employ an iconographic messaging technique for displaying the context of a called party to a calling party.

It is yet another object and advantage of this invention to provide methods and apparatus that transfer context from one user to another user in a wireless communications system during at least one of a call origination procedure or a call termination procedure.

Other objects and advantages of these teachings will be made apparent in the ensuing detail description of the invention.

The foregoing and other problems are overcome and the foregoing and other objects and advantages are realized by methods and apparatus in accordance with embodiments of this invention.

In a first aspect this invention provides a technique that employs DTMF signaling for overriding a context set by a user. As an example, a user manually enters in a context, where he or she cannot answer incoming calls, and activates a context-related answering service (in the phone or in the network). When called, the answering service can make the calling party aware of the called parties' current active context (e.g., in a meeting). This activation can also be made automatically according to algorithms based on context recognition (e.g., the called parties' presence is sensed in a meeting room along with the presence of at least one other person). When a caller makes a phone call, the caller receives a voice reply informing him or her that the person being called cannot answer at that moment, because the called party is, for example, currently in a meeting (being in a meeting is the called parties current context). The caller may then press a key, for example the number '1' button, to indicate to the service or to phone that this call is of such importance that it must be passed through. Pushing the keypad key is recognized by the calling parties communication device, and a DTMF signal corresponding to the number '1' button is generated and transmitted to the network. In response to receiving the DTMF signal the answering service automatically passes the call through, and the called parties' phone reacts normally to the incoming call. That this, the called parties' phone functions in a manner consistent with its active context/profile (e.g., ringing tone, volume, caller groups etc.). If the caller instead does not press any button, a normal voice message can be left for the called party, or the caller may simply hangup and call again later. However, no visible or audible activity take place in the called parties' phone, which is set in the meeting context. That is, the called party need not be aware of the attempted call.

The described meeting case is simply one example of transferring context information and providing an ability to force or override a context set for a called parties' phone.

In this first aspect there is taught a method for operating a wireless communication system that includes steps of setting a context-sensitive facility in one of a mobile station or in a wireless network; informing a caller of the setting; and overriding the setting by sending a signal from the caller to the context-sensitive facility. The context-sensitive facility can be implemented as an answering service, the signal can be a DTMF signal generated in response to an input from the caller, and in this case the step of overriding forces the call through to a called parties' mobile station when the setting is to not allow calls to be made to the called parties' mobile station.

In a further aspect this invention employs the use of GSM or similar signaling during call origination and/or call termination to exchange context information in the form of at least one of graphical icons, text, or information codes, wherein one or both of the parties can chose whether to reveal context information, and if it is desired to reveal context information, exactly what context information should be revealed to the other party.

This further aspect provides a method for operating a wireless communication system using steps of specifying context information at a calling parties' mobile station; transmitting signaling during a call origination phase to selectively exchange context information between the calling party and a called party, the context information being in the form of at least one of graphical icons, text, or information codes specifying graphical icons; and displaying the context information to at least one of the calling party or the called party prior to establishing a voice call. The step of specifying can be performed manually by the calling party or it can be performed at least in part in an automatic fashion based on the outputs of one or more sensors that are responsive to a context of the calling party. The step of transmitting occurs over a control channel, prior to establishment of a voice channel. A graphical icon may be displayed by first accessing a memory of the mobile station to retrieve a prestored icon bit-map, which may have been downloaded from a source of icons, or one previously received from the other party.

Additional information can be transmitted during call termination. For a case where the called party does not accept the call or does not answer the call, the method includes further steps of storing the context information, and subsequently displaying the context information in conjunction with a display of missed calls. In general, a single displayable graphical icon of n pixels is specified by transmitting m messages, each conveying up to n/m pixels, where m is equal to or greater than one.

The above set forth and other features of the invention are made more apparent in the ensuing Detailed Description of the Invention when read in conjunction with the attached Drawings, wherein:
Fig. 1 is a block diagram showing a wireless communication system that is suitable for practicing these teachings;
Fig. 2 is a logic flow diagram that illustrates a method in accordance with a first aspect of this invention;
Fig. 3 is a signal flow diagram depicting an example of manual behavior for revealing context information in accordance with a second aspect of this invention;
Fig.4 is a signal flow diagram depicting an example of autonomous behavior for revealing context information;
Fig. 5 is a signal flow diagram showing an example wherein a time-out occurs (during an SMS-based information exchange);
Fig. 6 shows a set of examples of personalized icons, including context, topic of call, call importance and call location;
Fig. 7 illustrates hybrid icon merger, and is an example of how graphical context is combined with icons stored in a receiver phone and with a received icon(s), including an example of hybrid SMS (textual descriptions and binary data), and an example of an automatically generated icon from a true-color image; and

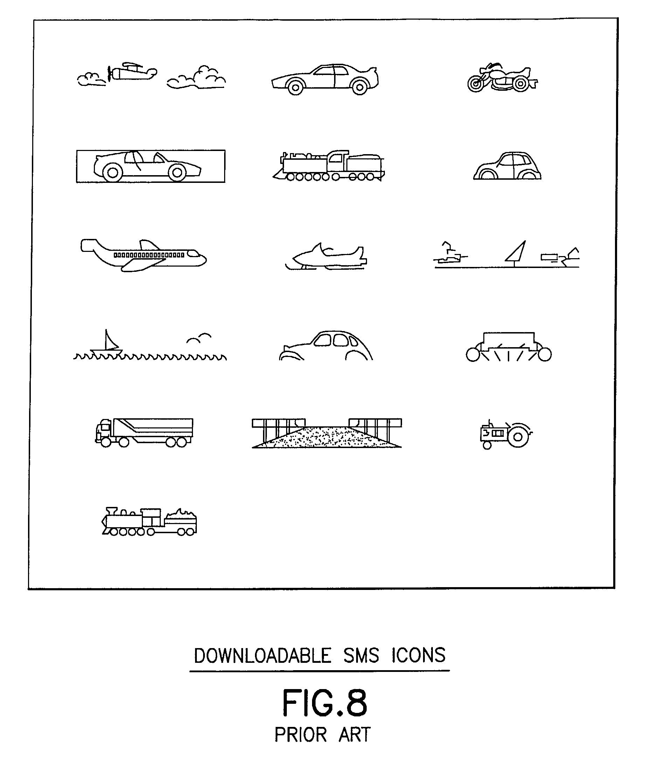

Fig. 8 shows a plurality of graphical icons that are currently obtainable as a download from a Web site; and
Fig. 9 depicts an example of the use of icons in a missed call situation.

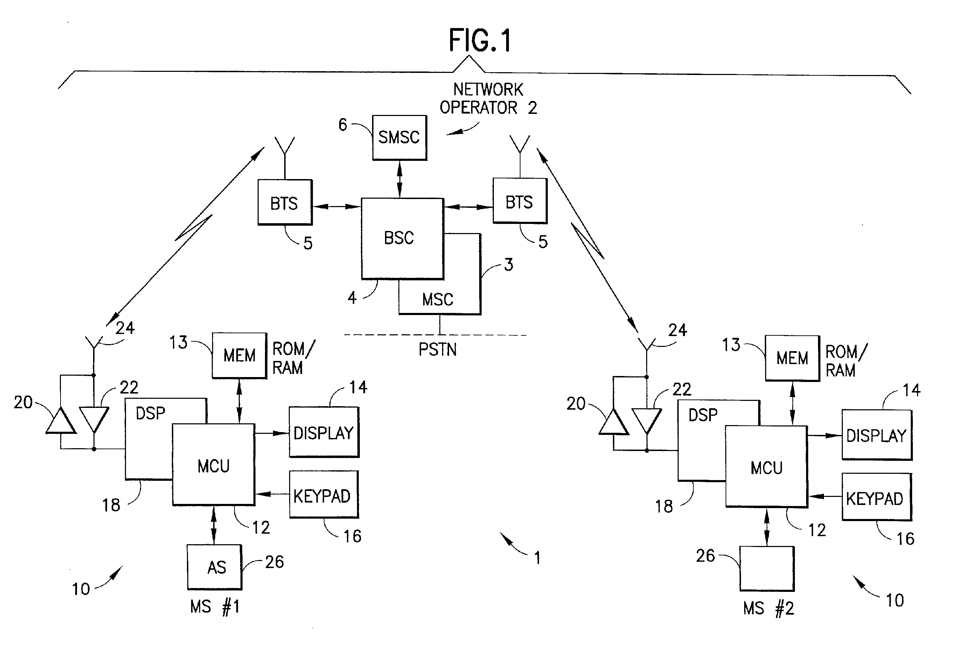

Referring to Fig. 1, there is illustrated a simplified block diagram of an embodiment of an exemplary wireless telecommunications system 1 that includes a plurality of mobile terminals or stations 10. Two mobile stations (MSs) are shown in the Figure, with one being designated MS#1 and the other MS#2. Fig. 1 also shows an exemplary network operator 2 having, for example, a mobile switching center (MSC) 3 for connecting to a telecommunications network, such as the Public Switched Telephone Network or PSTN, at least one base station controller (BSC) 4, and a plurality of base transceiver stations (BTS) 5 that transmit in a forward or downlink direction both physical and logical channels to the mobile stations 10 in accordance with a predetermined air interface standard. It is assumed that a reverse or uplink communication path exists from the mobile station 10 to the network operator, which conveys mobile originated access requests and traffic, as well as signaling for implementing the teachings of this invention.

In the exemplary, but not limiting, embodiment of these teachings, the air interface standard conforms to a Time Division Multiple Access (TDMA) air interface, and the network may be a GSM network. However, the teachings of this invention apply equally to Code Division Multiple Access (CDMA) networks, as well as to other network types.

The network operator 2 can include a Message Service Center (MSCT) that receives and forwards messages for the mobile stations 10, such as Short Message Service (SMS) messages, or any wireless messaging technique including e-mail and Supplementary Data Services. Furthermore, enhancements to SMS can be used, such as one under development and known as Multimedia Messaging Service (MMS), wherein image messages, video messages, audio messages, text messages, executables and the like, and combinations thereof, can be transferred between a network and a mobile station.

The mobile station 10 typically includes a microcontrol unit (MCU) 12 having an output coupled to an input of a display 14 and an input coupled to an output of a keyboard or keypad 16. The mobile station 10 may be considered to be a handheld radiotelephone, such as a cellular telephone or a personal communicator, and may have a microphone and a speaker (not shown) for conducting voice communications. The mobile station 10 could also be contained within a card or module that is connected during use to another device. For example, the mobile station 10 could be contained within a PCMCIA or similar type of card or module that is installed during use within a portable data processor, such as a laptop or notebook computer, or even a computer that is wearable by the user.

The MCU 12 is assumed to include or be coupled to some type of a memory 13, including a read-only memory (ROM) for storing an operating program, as well as a random access memory (RAM) for temporarily storing required data, scratchpad memory, received data packets and data packets prepared for transmission, etc. A separate, removable SIM (not shown) can be provided as well, the SIM storing, for example, a preferred Public Land Mobile Network (PLMN) list and other subscriber-related information. The ROM is assumed, for the purposes of this invention, to store a program enabling the MCU 12 to execute the software routines required to operate in accordance with the presently preferred embodiments of these teachings.

The mobile station 10 also contains a wireless section that includes a digital signal processor (DSP) 18, or equivalent high speed processor, as well as a wireless transceiver comprised of a transmitter 20 and a receiver 22, both of which are coupled to an antenna 24 for communication with the network operator 1.

In accordance with a first aspect of this invention, and by example, a user enters a context indicating that the user desires not to answer incoming calls, and activates a context-related answering service (AS ) 26 in the mobile station 10 (e.g., MS#1) or in the network 2. This activation can also be made automatically according to pre-set routines based on context recognition. When a caller makes a phone call, such as from MS#2, the caller receives a voice reply indicating that the person being called cannot answer at the moment. The reason why the called party cannot answer may also be given, e.g., because the called parties' context is currently set to "in a meeting". In response, the caller can press some predetermined key on the keypad 16, for example the '1' key, to indicate to the answering service in the network 2 or in the MS#1 that this call is important and must be passed through. The depression of the '1' key results in the MS#2 generating a corresponding DTMF signal and transmitting the DTMF signal to the answering service. The answering service 26 is programmed to respond to the reception of the DTMF signal representing a '1' for passing the call through, and MS#1 reacts normally to incoming call. That is, MS#1 functions in accordance with its active context/profile (e.g., ringing tone, volume, caller groups, etc.). If instead the caller does not press any keypad key, or presses a keypad key other than the '1 key, a normal voice message may be left with the answering service 26, or the caller may simply hang up the call. In this case no visible or audible activity need take place at MS#1, which is set in the meeting context.

In a typical case when a phone call has not been answered some information is provided on the display 14 showing the number of the caller, etc. In this particular situation, if the caller did not press the '1' key, some indication of a missed call can be shown on the display 14 after the call has been ended. This type of operation does not disturb the called party or the meeting in a way, and the person in the meeting is not required to decide whather to answer the call or not.

The described meeting case is just one example of transferring context information and using it to force the other end's mobile station to react in a manner that is consistent with the wishes of the called party.

In this embodiment of the invention the mobile station 10 (or the network 2) is provided with the automatic answering service 26, which could be based on a text-to-speech technology or some corresponding technology, the context-based use of profiles, which profiles can be stored in the memory 13, and a program for performing DTMF interpretation from incoming audio signals.

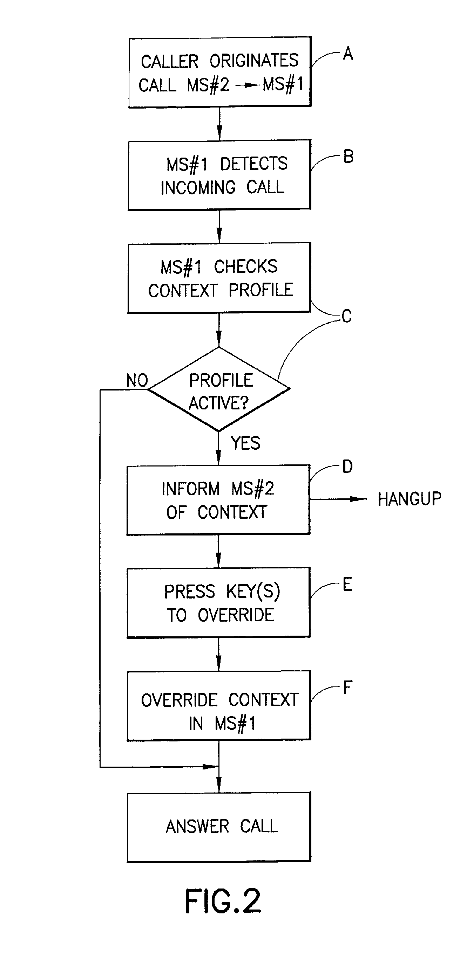

Referring to Fig. 2, there is shown a logic flow diagram that illustrates the foregoing call processing. At Step A the caller activates the call (MS#2 to MS#1). At Step B MS#1 detects the incoming call. At Step C MS#1 checks the stored context profile in the memory 13 to determine which, if any, context based functions are activated. If none are activated, or if none are activated that affect the answering of incoming calls, then the call is received so that it can be answered in a normal fashion. Assuming for this example that the automatic answering service context-based function is activated, at Step D the answering service 26 informs the caller of the called phone's context. If MS#2 receives context information from the answering service 26 of MS#1, at Step E the caller can press some pre-defined key or keys on the keypad 16 to indicate that this call has to be passed through to MS#1. Alternatively, the caller can simply hangup, and try the call again later. If the caller presses the pre-defined key or keys, then at Step F the answering service 26 allows the call to be answered in a normal fashion (i.e., one consistent with the user's selected call answering profile, such as alerting type, alerting volume, etc.)

It should be noted once again that while MS#1 responded to the incoming call, only the answering service function 26 need be initially aware of the occurrence of the incoming call in order to transmit the pre-set context-related message to MS#2, and to then monitor the line for the presence of one or more predetermined DTMF tones. That is, the user of MS#1 need not have any knowledge that his or her phone has been called, and is thus not disturbed by the presence of the incoming call unless the calling party causes the call to be forced through, thereby overriding the user's context-based answering profile.

It can be realized that while this example has described the case of MS#2 calling MS#1, the call to MS#1 could have been originated from a conventional telephone as well. Furthermore, if the calling phone has speech recognition capability, or if this capability is present in MS#1, then there may be no need to depress a keypad key to signal the calling parties intention to override the context-based restriction on incoming calls at MS#1. Furthermore, and as was discussed above, the answering service function 26 may be present in the network 2, in which case the call need not be connected at all to MS#1 unless the caller overrides the context-based call restriction that was set by the user for MS#1 (either directly by the user or automatically in response to one or more context sensors).

Having thus described a first aspect of these teachings, a second aspect will now be described. The second aspect employs the use of GSM or similar signaling during call origination or call termination to exchange context information as icons, text, or information codes, wherein one or both of the parties can chose whether to reveal context information, and if it is desired to reveal context information, exactly what context information should be revealed to the other party.

Advantages of this technique over conventional speech-only context notification and exchange methods include the following. First, the caller is able to see the context of the recipient when the call is being established, and also during the call. This allows the caller to adjust his/her communication behavior according to the recipient's context, as an example. The caller is also able to determine the reason why the recipient does not answer the call. Also, the recipient is able to see the context of the caller and the characteristics of the call. For example, the recipient can use priority information to decide whether or not to answer the incoming call. Exchanging information prior to the actual voice call reduces the amount of information exchange that need be done by speech. This allows the context information of both communication parties to be exchanged silently and unobtrusively. The exchanged context allows the social communication to go immediately to the next level. For example, seeing that the caller is riding in a bus allows the recipient to ask directly where he/she is going at the moment. The context and other information exchanged prior to the actual voice call can be considered as a new form of communication. Furthermore, there may be times when a voice call is not required at all, as a mere exchange of context information may be sufficient. This is especially true if the users are enabled to customize to some degree the context-related information that is used.

As compared to the network-based context server approach this method also provides advantages. First, the recipient of the call can have knowledge of the context of the caller and the characteristics of the call prior to the voice call. Also, the recipient of the call sends his/her context only when required, that is, once a call is being established. There is no hidden cost, instead the user can explicitly control when the phone does something which will be charged, i.e., sending context information. Also, the context information can be stored completely in the user's mobile station 10, and the user has explicit control over what information is revealed to the caller. Deciding what information is revealed can be done on a per call basis, if desired. Also, less power consumption occurs due to the fact that the user's mobile station 10 is not required to perform context updates to an external server.

This aspect of the invention significantly enhances and enriches the communication process, as it employs silent, gesture based communication presented in the form of graphical icons. As such, even persons with hearing impairments may benefit from the use of these teachings. Since the user can silently transmit meaningful information, the user is less obtrusive in his or her environment. The teachings of this invention extend and enhance current SMS/textual graphics/icon based communication, and provides a two-way exchange of information, which is substantially more powerful than a one-way exchange. Moreover, it is also inherently fair technique for both communication parties, and more readily accepted (e.g., if you reveal something about your context I will reveal something about my context). Both parties to the communication have equal facilities for deciding and mediating context information about themselves. A user may decide on a per call basis whether to reveal information, or whether even false information may be revealed. Furthermore, the SMS-based method is operable on existing GSM and other network systems, and is compatible with the future UMTS system as well. Moreover, relatively minor changes in how SMS-messages are handled by teleoperators can improve the functionality of the SMS-based method substantially. These teachings are also compatible with an existing installed base of mobile stations, and mobile stations lacking the required functionality may simply just not utilize the received context information. The user-to-user (UUS) signaling method is operable with phase 2+ GSM network systems and is compatible with future UMTS systems as well, and is very well suited for networks providing general packet radio service (GPRS) and enhanced GPRS functionality. Furthermore, personalized context icons can be created through existing icon-definition servers and software, such as Web/Wap, and are downloadable through smart messages.

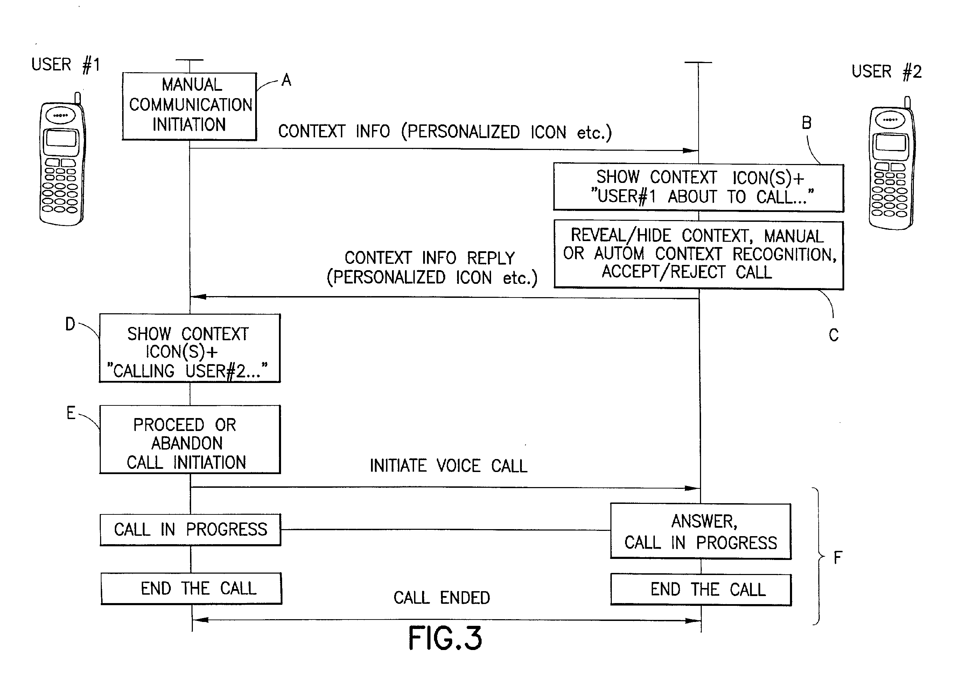

Referring to Fig. 3, when a caller (User #1 in this case) decides to make a context call, the caller first sets up the information required for the call. This information contains the caller's current context and, optionally, other call-related information, such as the priority or the topic of the call. The information is set by selecting appropriate graphical icons from a set of icons, stored in the mobile station memory 13, which best describe the context information. Alternatively, the caller can describe the context information by using text or a combination of text and icons. Some of the context information may be deduced automatically by the caller's phone, for example by using suitable sensors, and this deduced context information (e.g., location) may be presented as an initial set of icons or text strings to the caller, which the caller can then modify to better describe the current context, if desired, or to suppress certain of the context information, such as the caller's current location).

After setting up the information the caller begins the call initiation (Step A). When this happens, the caller's mobile station 10 sends a message to the recipient's mobile station 10 (e.g., MS#1 to MS#2). This message contains the information set by the caller as described earlier, encoded in a suitable format. When the recipient's mobile station 10 receives the message, the MCU 12 detects the message that signals the initialization of a context call. The MCU 12 decodes the information stored within the message, presents it on the display 14 (Step B), and notifies the recipient. The information is presented as graphical icons, text, or a combination of text and graphical icons. Moreover, the recipient mobile station 10 can use a variety of auditory signals to present the information to the recipient. For example, the contexts "happy" and "angry", as well as different levels of call priority, may have distinct auditory signals.

Signaled by mobile station 10, the recipient (User #2 in this case) notices that a context call is coming from the caller, along with the caller id and the information set by the caller. The recipient can use the information presented by the recipient's mobile station 10 to deduce parts of the context of the caller, and possibly some coarse information about the call. The recipient then decides whether to reveal her context, or some parts of it, to the caller, to receive the call without revealing her context, or to refuse to receive the call altogether (Step C). The recipient can also ignore the call.

If the recipient decides to reveal context to the caller, the recipient does this by interacting with user interface of the mobile station 10, such as the display 14 and the keypad 16 by selecting one or more graphical icons from a set of icons stored in the recipient's memory 13. The selected icon(s) may be those which best describe the recipient's context. Alternatively, the context information can be described by using text or as a combination of text and icons. Other call related information can also be set, such as whether the recipient wants to receive the actual voice call. Some of this information can be deduced automatically by the mobile station 10, for example by using suitable sensors, and this deduced information can be presented as an initial set of icons, text strings or a combination of both text and graphics to the recipient, which the recipient can then modify or suppress, if desired.

After the recipient has set up the information, the recipient's mobile station 10 sends a reply message to the caller's mobile station 10. This message contains the information set by the recipient as described earlier, encoded in a suitable format. If the recipient decided not to reveal context to the caller, this message may only contain information such as whether the recipient wishes to accept the call.

After the caller's mobile station 10 receives the reply message from the recipient, the MCU 12 decodes the information within the message and presents it to the caller on the display 14, again by using graphical icons, text or a combination of text and graphics (Step D). The mobile station 10 can use a variety of auditory signals to present the information to the caller. The caller can then use this information to deduce at least some of the context of the recipient, and whether the recipient wishes to accept the call. The caller can then proceed with the call or abort the call (Step E). If the caller decides to proceed, the caller's mobile station 10 is used to make a normal voice call to the recipient (Steps F).

Note in this case that the exchanges of context information take place using signaling channels before the actual voice call initiation or origination.

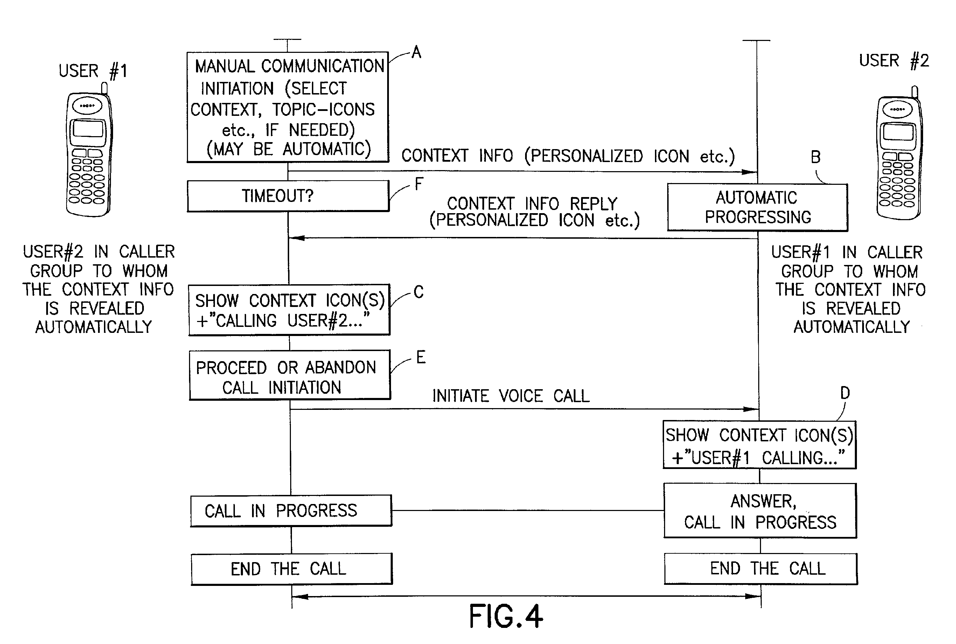

Referring to Fig. 4, both the caller's and recipient's mobile stations 10 can also generate and process exchanged messages automatically. The caller's mobile station 10 can automatically deduce some parts of the context of the caller and possibly also the importance of the call by using a variety of sensors. However, deducing automatically the topic of the call may be more difficult. The context information is preferably sent to the recipient when the caller desires to make a context call (Step A).

The recipient's mobile station 10 can also process the incoming context call message automatically (Step B). In this case, the recipient's mobile station 10 stores the received information and sends an automatic message back to the caller. This message contains the context information and other call related information deduced automatically by the recipient's mobile station 10. Once the caller's mobile station 10 receives the reply, it may start the actual voice call automatically. Both the caller and the recipient see the exchanged information when the voice call alerts at the beginning of the call (Steps C and D) if the caller decides not to abandon the call (Step E).

As is apparent in Fig. 4, the users may be preassigned to Caller Groups, and only users assigned to such Caller Groups are authorized to receive context information, or are authorized to send context information to, in the automatic manner.

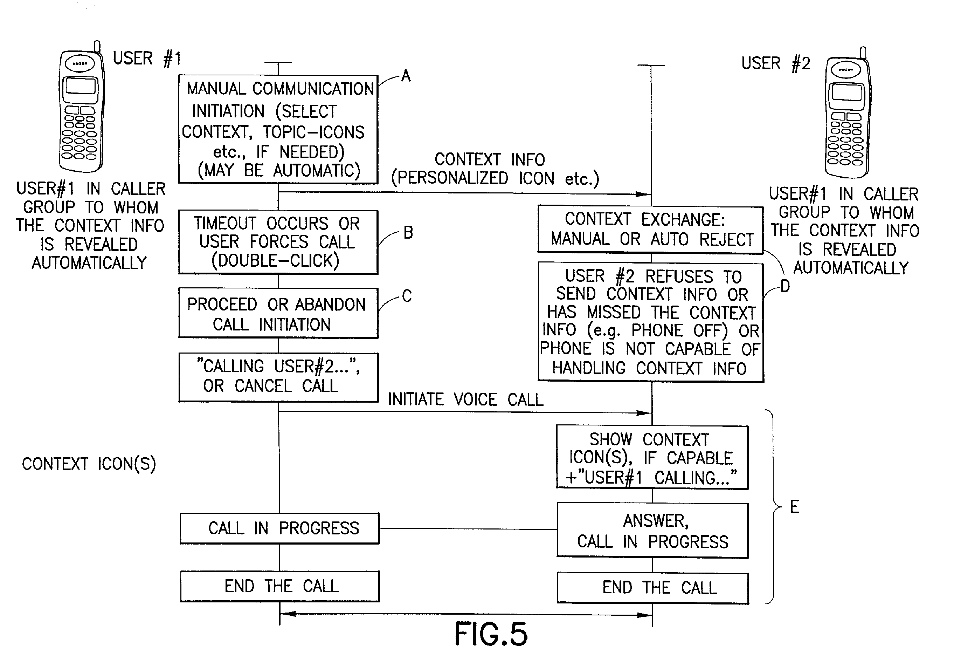

A timeout mechanism (Step F in Fig. 4) is preferably used so that the caller's mobile station 10 does not deadlock if the recipient does not send a message back to the caller. The reasons for the recipient not to send any reply back to the caller, not even an empty or null reply message, may include the added cost of sending the reply message, or simply the fact that the recipient is not near the mobile station 10 when the message arrives from the caller. For this purpose, and referring also to Fig. 5, the caller's mobile station 10 waits for a reply message only for a certain period of time (Step B), and after that notifies the caller that the recipient is not responding. The caller can then abort or proceed with the voice call (Step C). In this case it is assumed that at Step D the recipient has performed a manual or an automatic context exchange rejection, and/or that the recipient has refused to send context information, or missed the received context information from the caller, or that the recipient's mobile station 10 is not capable of processing the context information. It should be noted that the caller can decide not to wait for a reply message and proceed with the voice call at any moment, for example, by double clicking the call button. In this situation, if the caller's information has already been received, the recipient's mobile station 10 displays it as mentioned above. If the caller decides to proceed, then the voice call is initiated and completed at Steps E.

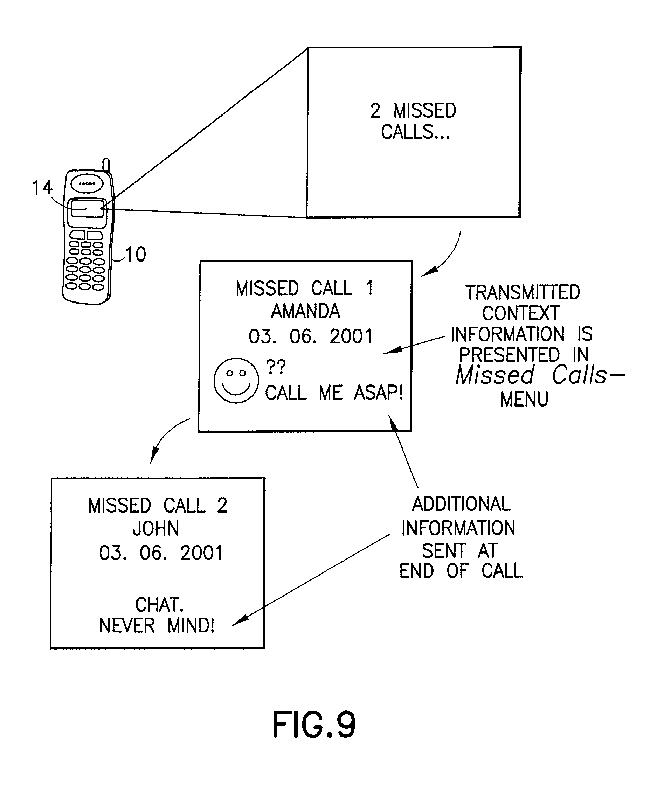

If the recipient has left her mobile station 10 unattended, the information received from one or more callers for missed context calls is preferably presented graphically to the recipient, for example in an icon list box. This allows the recipient later to see what kind of calls were tried, their importance, etc. when she was not present. If the recipient doesn't answer the call, the caller can send information related to the intended mobile station 10 call before hanging up (even if no information was sent in the beginning of the call). Reference in this regard can be had to Fig. 9, wherein the recipient is notified on the display 14 that she had two missed calls. By scrolling through the missed call screens the recipient is made aware that the first missed call was from Amanda on a certain date. The recipient is also shown the context information sent before the initiation of the voice call, as well as further or additional information entered by Amanda before hanging up and terminating the voice call (in this case the string "Call me asap!"). By continuing to scroll through the missed call screens the recipient is made aware that the second missed call was from John, the recipient is also shown the context information sent before the initiation of the voice call (in this case the text string "Chat."), as well as the further or additional information entered by John before hanging up and terminating the voice call (in this case the string "Never mind!").

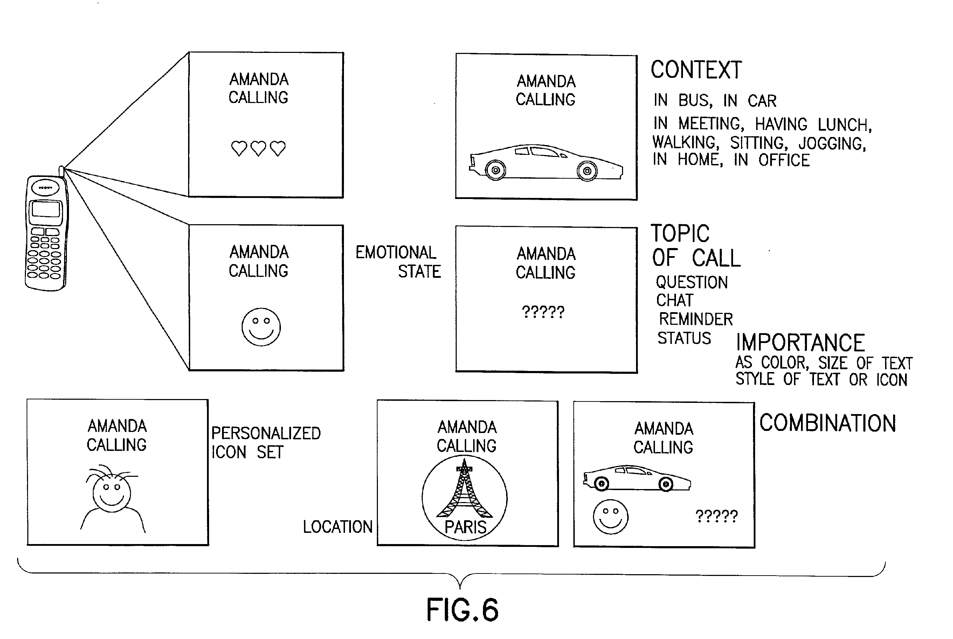

In general, and referring to Fig. 6, the information exchanged between the communicating parties before a context call may include: position information; affective state, mood and other types of mental states; importance, priority and the topic of the call; and/or other information, which may be customizable by users. Various icons and textual information can be combined on the display 14, and automatically sized as necessary, under control of the MCU 12.

The position, information may be described as text (e.g., office, home, shopping), as GPS coordinates (e.g., N34o34'34"E44o45'34"), or as a graphical icon describing the location in a desired way (e.g., in Paris: a picture of the Eiffel Tower). Other possible position information could include distance from home or office, distance from the other party, etc.

The context information may be an identification code, a graphical icon, or a text string. The context information is descriptive of certain facts, such as the person is in office, in a bus, in a car, in a meeting, at lunch, etc. The context information can also describe activities such as jogging, walking, reading, etc.

Affective state, mood and mental states can also be described as an identification code, a graphical icon, or as textual information. Examples of possible states include happy, sad, neutral, angry, laughing, sleepy, excited, thrilled, energetic, etc.

The importance, priority and the topic of the call are determined by the caller when the caller is making the context call. Importance and priority may have different degrees, e.g. low, medium, and high priority. Topic of the call may be presented as an id code, a graphical icon, or as textual information. Possible topics include question, informal chat, special event, reminder and so on. In the display phase, the priority information may be indicated with the color or the size of the font, with an icon, or with certain auditory signals. The control of the display 14, as well as auditory signal generators, is assumed to be handled by the MCU 12 of some of the controlling device in the mobile station 10.

It is possible for users to exchange personalized icons or textual data. For example, the caller can send a custom icon describing his position to the recipient. The custom icon might be generated automatically by a digital camera attached to the caller's mobile station 10.

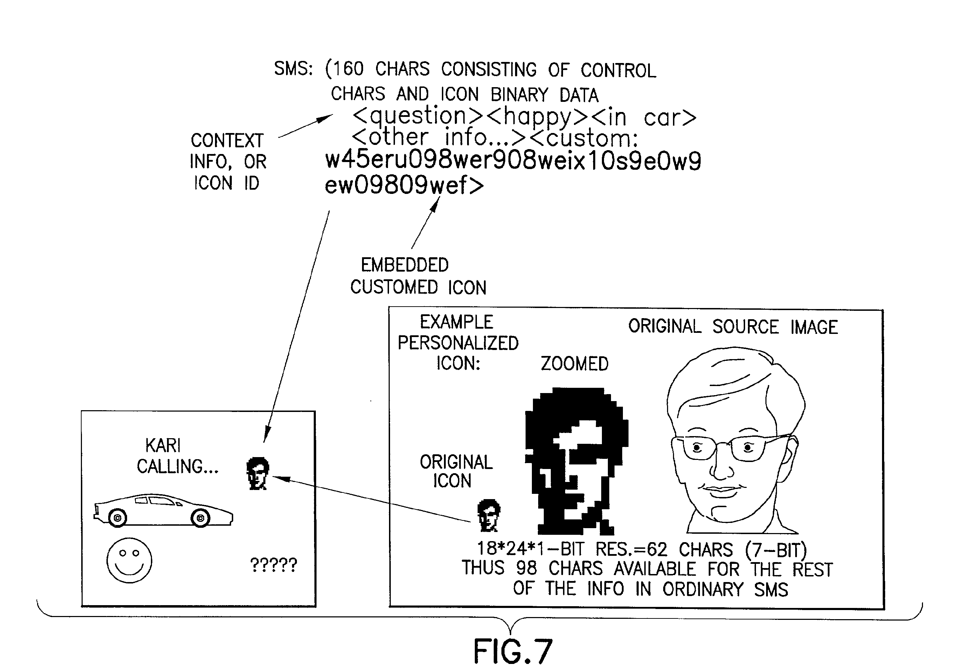

Fig.7 shows a customized icon generated automatically from a digital image (original source image) of the caller. By reducing the resolution and shrinking the size of the image the number of bytes of data required to represent the graphical image can be made relatively small (e.g., 62 7-bit characters). For a conventional SMS message (160 characters) this leaves 98 characters available in the SMS message to convey other information. Note that the exemplary SMS message sent from one user to another can include context information, such as icon identifiers (e.g. ,<question> causes an '????' icon to be generated, <in car> causes a graphical icon of an automobile to be generated, etc.). The 62 characters representing the custom icon are embedded in the SMS messages, and are identified as such by <custom:....>. In response to receiving the custom icon the MCU 12 may simply bit map the associated character data to the display 14.

Note should be made that the MCU 12 could also store the custom icon data in the memory 13, along with a descriptive tag (e.g., Kari's image). The next time that Kari wishes to send his image as an icon, it may be referred to simply as <Kari's image>, and the underlying character data need not be sent. The memory 13 may also be accessed by the recipient, and Kari's image data modified or deleted.

The exchanged information may be decoded into an SMS-message (or other messages provided by GPRS/MMS/UMTS etc.) as human readable plain text, compressed id codes, binary data, or as a combination of former.

The user may prefer to use personalized icons to describe context. For example, if the caller or the recipient is in an automobile, they might prefer to use an icon for that specific brand of automobile. Some of the icons can reside in the memory 13 of the mobile station 10, such as affective icons (happy faces, etc.) or topic of calls (question marks, reminders etc.), which can be identified with ID code or textually in the SMS or text file. These icons can be colored and of various sizes.

Personalized icons that are sent during the call initiation preferably fit within 160 characters, if the SMS/UUS transmission method is used. These icons may be combined in the display phase, as illustrated in Figs 6 and 7. Alternatively, the caller may have previously sent an icon to the recipient's mobile station 10 which, if accepted and stored by the recipient's mobile station 10, is used instead of a standard icon when specified. One example of this type of operation was discussed previously with reference to Fig. 7.

In one preferred embodiment of this invention SMS messages are employed to send and exchange the context information. The use of SMS messaging is particularly appropriate, as SMS messages can be sent over a control channel without specifically setting up a voice call. The actual voice call can then be initiated after the exchange of the SMS messages conveying the context information, as was described above.

The UUS method described for use in GSM (ETSI Phase 2+) is especially designed for user-to-user signaling, where the information is embedded in basic call control messages or transmitted as separate User Information messages (160 characters, as in SMS). UUS messaging is particularly useful for immediate context exchange in this invention, since the information is exchanged at the beginning, during, or at the end of a GSM phone call. The UUS message can be sent during the alerting period, and uses a digital control channel (DCCH) in the same manner as SMS messaging. The UUS method actually contains three sub-methods, referred to as UUS1, UUS2 and UUS3.

As defined in the ETSI GSM 4.87 V7.0.0 specification (1999-02), for UUS1 both parties may exchange user-to-user information during the set-up and clearing phase of a call by including user-to-user information elements in basic call control messages (Alerting, Connect, Disconnect, Progress, Release, Complete and Setup). UUS1 can be activated implicitly or explicitly. When USS1 has been activated, either user may include user-to-user information when rejecting, accepting or terminating the call.

For UUS2, both parties may send UUI (user-to-user information) after the alerting indication has been sent/received, and until the connect indication has been sent/received. The UUI is sent in a User Information message and is limited to two messages in each direction. The use of two messages in accordance with the teachings herein enable 320 characters, so that larger icons can be used. For example, 320 7-bit characters enable 47X47 (or 60X37) pixel icons to be sent and displayed.

In a more general case then, a single displayable graphical icon of n pixels may be specified through the use of m messages, each conveying up to n/m pixels, where m is equal to or greater than one.

For UUS3 both parties may send UUI in the active phase of the call using User Information messages. UUS3 is activated explicitly, when a call is originated or after the connection has been established. After UUS3 has been activated, either party may transfer UUI in User Information messages to the other party on the call. UUS3 is thus used during the call, and the number of messages is not limited.

Depending on the parties subscription to the UUS supplementary service, and on the provision of UUS services by the network operator 2, UUS1 implicit or explicit, UUS2 and UUS3 can be activated individually or in combination.

The Multimedia Messaging Service (MMS) can be used in a manner similar to SMS. The use of MMS enables more graphical content and more textual information to be sent, such as true-color jpegs, animated icons and also sounds. In MMS, a conventional SMS is first sent to the recipient. The SMS refers to the multimedia content that the recipient has downloaded from a MMS server. The downloading may occur automatically if a context information exchange is performed in accordance with these teachings.

In the presently preferred embodiment of this invention the use of UUS2 is preferred, as it enables two messages to be sent in each direction, and the context information can be exchanged while the called phone is alerting.

It should be appreciated that the teachings of this invention are not intended to be limited to any of the particular messaging formats and standards referred to above, or to any specific types of graphical icons, or to any specific numbers of characters sent in one or a plurality of messages, or to only the specific types and kinds of context information that were described.

Thus, while the invention has been particularly shown and described with respect to preferred embodiments thereof, it will be understood by those skilled in the art that changes in form and details may be made therein without departing from the scope and spirit of the invention.

## Claims

1. A method for operating a wireless communication system, comprising steps of:
setting a context-sensitive facility in one of a mobile station or in a wireless network;
informing a caller of the setting; and
overriding the setting by sending a signal from the caller to the context-sensitive facility.

2. A method as in claim 1, wherein the context-sensitive facility is comprised of an answering service.

3. A method as in claim 1, wherein the signal is comprised of a DTMF signal generated in response to an input from the caller.

4. A method as in claim 1, wherein the context-sensitive facility is comprised of an answering service, wherein the signal is comprised of a DTMF signal generated in response to an input from the caller, and wherein the step of overriding forces the call through to a called parties' mobile station when the setting is to not allow calls to be made to the called parties' mobile station.

5. A wireless communication system, comprising a context-sensitive facility in one of a mobile station or in a wireless network, said context-sensitive facility having an ability to inform a caller of the setting and for overriding the setting in response to receiving a signal sent from the caller to the context-sensitive facility.

6. A system as in claim 5, wherein the context-sensitive facility is comprised of an answering service.

7. A system as in claim 5, wherein the signal is comprised of a DTMF signal generated in response to an input from the caller.

8. A system as in claim 5, wherein the context-sensitive facility is comprised of an answering service, wherein the signal is comprised of a DTMF signal generated in response to an input from the caller, and wherein the step of overriding forces the call through to a called parties' mobile station when the setting is to not allow calls to be made to the called parties' mobile station.

9. A method for operating a wireless communication system, comprising steps of:
specifying context information at a calling parties' mobile station;
transmitting signaling during a call origination phase to selectively exchange context information between the calling party and a called party, the context information being in the form of at least one of graphical icons, text, or information codes specifying graphical icons; and
displaying the context information to at least one of the calling party or the called party prior to establishing a voice call.

10. A method as in claim 9, wherein the step of specifying is performed manually by the calling party.

11. A method as in claim 9, wherein the step of specifying is performed at least in part in an automatic fashion based on the outputs of one or more sensors that are responsive to a context of the calling party.

12. A method as in claim 9, wherein the step of transmitting occurs over a control channel, prior to establishment of a voice channel.

13. A method as in claim 9, wherein a graphical icon is displayed by first accessing a memory of the mobile station to retrieve a prestored icon bit-map.

14. A method as in claim 9, wherein a graphical icon is displayed by first accessing a memory of the mobile station to retrieve a prestored icon bit-map that was previously received from the other party.

15. A method as in claim 9, and further comprising a step of transmitting additional information during call termination.

16. A method as in claim 9, wherein for a case where the called party does not accept the call or does not answer the call, the method comprises further steps of storing the context information, and subsequently displaying the context information in conjunction with a display of missed calls.

17. A method as in claim 9, wherein a single displayable graphical icon of n pixels is specified by transmitting m messages, each conveying up to n/m pixels, where m is equal to or greater than one.

18. A wireless communication system, comprising a user interface for specifying context information at a calling parties' mobile station; a transmitter for transmitting signaling during a call origination phase to selectively exchange context information between the calling party and a called party, the context information being in the form of at least one of graphical icons, text, or information codes specifying graphical icons; and a display for displaying the context information to at least one of the calling party or the called party prior to establishing a voice call.
